(19) Europäisches Patentamt European Patent Office Office européen des brevets

(11) **EP 4 550 126 A2**

(12) **EUROPEAN PATENT APPLICATION**

(43) Date of publication:
07.05.2025 Bulletin 2025/19

(21) Application number: 24223462.3

(22) Date of filing: 27.12.2024

(51) International Patent Classification (IPC):
*G06F 9/30* (2018.01)   *G06N 3/063* (2023.01)

(52) Cooperative Patent Classification (CPC):
G06F 9/30014; G06N 3/063

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.12.2023 CN 202311864215

(71) Applicant: Beijing Horizon Information
Technology Co., Ltd.
Haidian District, Beijing 100094 (CN)

(72) Inventors:
• ZHANG, Yinan
Beijing, 100094 (CN)
• LI, Delin
Beijing, 100094 (CN)

(74) Representative: Epping - Hermann - Fischer
Patentanwaltsgesellschaft mbH
Schloßschmidstraße 5
80639 München (DE)

(54) **INSTRUCTION GENERATION METHOD, DATA PROCESSING METHOD, AND ELECTRONIC DEVICE**

(57)     This disclosure provides an instruction generation method, a data processing method, and an electronic device. In the instruction generation method, a hardware parameter of a neural network processor performing data processing is first determined; a data parameter of to-be-processed data is determined, where the data parameter includes a data type and a quantity of data bits of the to-be-processed data, and the data type includes a signed integer and an unsigned integer; and an instruction for data processing that is executable by the neural network processor is generated based on the hardware parameter and the data parameter. According to this disclosure, the hardware parameter of the neural network processor and the data parameter of the to-be-processed data are comprehensively considered when generating the instruction for data processing that is executable by the neural network processor.

FIG. 1b

**Description**

**FIELD OF THE INVENTION**

This disclosure relates to the technical field of data processing, and in particular, to an instruction generation method, a data processing method, and an electronic device.

**BACKGROUND OF THE INVENTION**

Currently, data processing tasks are involved in various fields. For example, in the field of image processing, sometimes image data needs to be processed; and in the field of intelligent driving, sometimes image data, radar point cloud data and the like need to be processed. Moreover, with development of technologies, data that needs to be processed becomes increasingly diverse, and correspondingly, a quantity of bits of the data that needs to be processed is increasing. For example, in some scenarios, data that previously needs to be processed is 8-bit signed integer data, while currently it is often necessary to process 16-bit signed integer data.

**SUMMARY OF THE INVENTION**

To meet requirements of processing high-bit data, this disclosure provides a data processing method for a neural network processor, a data processing method, and an electronic device.

According to a first aspect of this disclosure, an instruction generation method for data processing by a neural network processor is provided, including:

determining a hardware parameter of the neural network processor performing data processing;

determining a data parameter of to-be-processed data, wherein the data parameter includes a data type and a quantity of data bits of the to-be-processed data, and the data type includes a signed integer and an unsigned integer; and

generating an instruction for data processing that is executable by the neural network processor based on the hardware parameter and the data parameter.

According to a second aspect of this disclosure, a data processing method is provided, including:

determining a data parameter of to-be-processed data, wherein the data parameter includes a data type and a quantity of data bits of the to-be-processed data, and the data type includes a signed integer and an unsigned integer;

generating an instruction for data processing that is executable by a neural network processor based on the data parameter and a hardware parameter of the neural network processor; and

performing data processing on the to-be-processed data based on the instruction, to obtain data-processed data.

According to a third aspect of this disclosure, an instruction generation apparatus for data processing by a neural network processor is provided, including:

a first determining module, configured to determine a hardware parameter of the neural network processor performing data processing;

a second determining module, configured to determine a data parameter of to-be-processed data, wherein the data parameter includes a data type and a quantity of data bits of the to-be-processed data, and the data type includes a signed integer and an unsigned integer; and

an instruction generation module, configured to generate an instruction for data processing that is executable by the neural network processor based on the hardware parameter determined by the first determining module and the data parameter determined by the second determining module.

According to a fourth aspect of this disclosure, a data processing apparatus is provided, including:

a parameter determining module, configured to determine a data parameter of to-be-processed data, wherein the data parameter includes a data type and a quantity of data bits of the to-be-processed data, and the data type includes a signed integer and an unsigned integer;

an instruction determining module, configured to generate an instruction for data processing that is executable by a neural network processor based on the data parameter determined by the parameter determining module and a hardware parameter of the neural network processor; and

a data processing module, configured to process the to-be-processed data based on the instruction determined by the instruction determining module, to obtain processed data.

According to a fifth aspect of this disclosure, a computer readable storage medium is provided. The storage medium stores a computer program thereon, which is used for implementing the instruction generation method for data processing by a neural network processor according to the first aspect of this disclosure or for implementing the data processing method according to the second aspect of this disclosure.

According to a sixth aspect of this disclosure, an electronic device is provided. The electronic device includes:

a processor; and
a memory for storing processor-executable instructions.

The processor is configured to read the executable instructions from the memory, and execute the instructions to implement the instruction generation method for data processing by a neural network processor according to the first aspect of this disclosure or to implement the data processing method according to the second aspect of this disclosure.

According to the instruction generation method for data processing by a neural network processor provided in embodiments of this disclosure, the hardware parameter of the neural network processor and the data parameter of the to-be-processed data are comprehensively considered when generating the instruction for data processing that is executable by the neural network processor. The data parameter includes the data type and the quantity of data bits. Therefore, this disclosure can resolve a problem that the neural network processor does not support data processing for high-bit signed integer data, thereby satisfying requirements of data processing for high-bit signed integer data.

The data processing may include operations (such as multiplication or addition, etc.). In this case, according to the solutions provided in the embodiments of this disclosure, the neural network processor can be enabled to perform operations on the high-bit signed integer data to improve accuracy of the operations, thereby satisfying requirements of the neural network processor for performing operations on the high-bit signed integer data.

## BRIEF DESCRIPTION OF THE DRAWINGS

FIG. 1a is an exemplary structural diagram of a system to which this disclosure is applicable;
FIG. 1b is a schematic structural diagram of an electronic device according to an exemplary embodiment of this disclosure;
FIG. 1c is a schematic structural diagram of another electronic device according to an exemplary embodiment of this disclosure;
FIG. 2 is a schematic flowchart of an instruction generation method for data processing by a neural network processor according to an exemplary embodiment of this disclosure;
FIG. 3 is a schematic flowchart of an instruction generation method for data processing by a neural network processor according to another exemplary embodiment of this disclosure;
FIG. 4 is a schematic flowchart of an instruction generation method for data processing by a neural network processor according to still another exemplary embodiment of this disclosure;
FIG. 5 is a schematic flowchart of an instruction generation method for data processing by a neural network processor according to yet another exemplary embodiment of this disclosure;
FIG. 6 is a schematic flowchart of an instruction generation method for data processing by a neural network processor according to still yet another exemplary embodiment of this disclosure;
FIG. 7 is a schematic flowchart of an instruction generation method for data processing by a neural network processor according to a further exemplary embodiment of this disclosure;
FIG. 8 is a schematic flowchart of a data processing method according to an exemplary embodiment of this disclosure;
FIG. 9 is a schematic flowchart of a data processing method according to another exemplary embodiment of this disclosure;
FIG. 10 is a structural diagram of an instruction generation apparatus for data processing by a neural network processor according to an exemplary embodiment of this disclosure;
FIG. 11 is a structural diagram of a data processing apparatus according to an exemplary embodiment of this disclosure; and
FIG. 12 is a structural diagram of an electronic device according to an exemplary embodiment of this disclosure.

## DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that the scope of this disclosure is not limited by relative arrangement of components and steps, numeric expressions, and numerical values described in these embodiments, unless specified otherwise.

Application overview

With development of science and technologies, application of artificial intelligence in life of people is becoming increasingly common. In artificial intelligence technologies, neural network processors are often applied. In addition, the neural network processor is usually provided with a large quantity of multiply-accumulate (MAC) units. These units may be used to process data obtained by the neural network processor, such as performing operations (such as multiplication or addition) on the data.

In addition, with increasingly widespread application of the neural network processor, types of data that the neural network processors need to perform operations on are also increasing. For example, the data may include image data, point cloud data, speech data, and the like.

The types of the data may be classified into signed integers and unsigned integers. Signed integer data may be represented as intX, wherein X represents a quantity of data bits of this data, and a highest bit of the data is used to represent a sign of the data. If the highest bit of the data is 1, it means that the data is a negative number; and if the highest bit of the data is 0, it means that the data is a positive number.

For example, int8 represents 8-bit signed integer data, which occupies 1 byte with a bit value of 8. A value range of the int8-type data is [-128, 127]. int16 represents 16-bit signed integer data, which occupies 2 bytes with a bit value of 16 and a value range of [-32768, 32767]. int32 represents 32-bit signed integer data, which occupies 4 bytes with a bit value of 32 and a value range of [-2147483648, 2147483647]. int64 represents 64-bit signed integer data, which occupies 8 bytes with a bit value of 64 and a value range of [-9223372036854775808, 9223372036854775807].

Unsigned integer data may be represented as uintY, wherein Y represents a quantity of data bits of this data. Moreover, this data is only used to represent 0 and positive numbers.

For example, uint8 represents 8-bit unsigned integer data, which has a value range of [0, 255]; uint16 represents 16-bit unsigned integer data, which has a value range of [0, 65535]; uint32 represents 32-bit unsigned integer data, which has a value range of [0, 4294967295]; and uint64 represents 64-bit unsigned integer data, which has a value range of [0, 18446744073709551615].

In related technologies, the neural network processor usually only supports multiplication operations on the int8-type data. That is, when the neural network processor performs a multiplication operation of "C=A * B", both A and B are required to be int8-type data.

However, with increasing demand for algorithm accuracy, in some cases, the neural network processor also needs to perform operations on higher-bit signed integer data. For example, sometimes the neural network processor is required to perform operations on int16-type data, int32-type data, or other higher-bit signed integer data.

However, the neural network processor usually does not support operations on the higher-bit signed integer data. Although the neural network processor is used to perform operations on the high-bit signed integer data, there is still a significant difference between an obtained operation result and an actual result. Therefore, the neural network processor cannot satisfy requirements for performing operations on the higher-bit signed integer data.

For example, in a case where the neural network processor can only support operations on the int8-type data, if the neural network processor is required to perform operations on the int16-type data, the neural network processor usually takes the int16-type data as the int8-type data for operations, resulting in poor accuracy of the obtained operation result.

Exemplary device

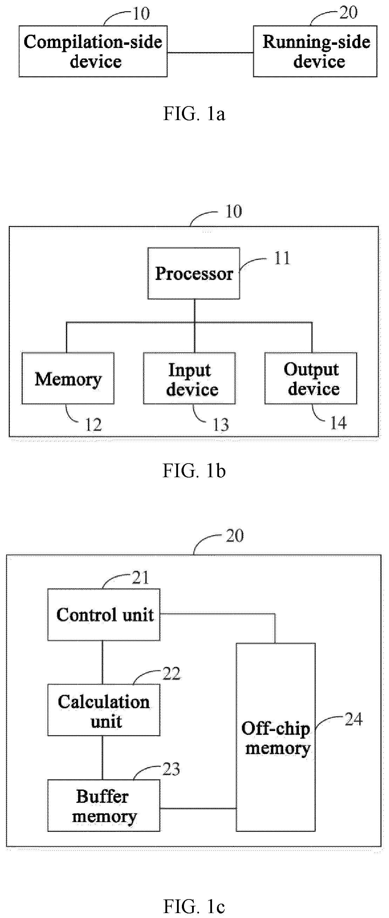

Referring to FIG. 1a, embodiments of this disclosure relate to a compilation-side device 10 and a running-side device 20. The compilation-side device 10 is configured to generate executable instructions for a neural network processor. The running-side device 20 is configured to perform corresponding operations by running the instructions provided by the compilation-side device. These operations include, but are not limited to multiplication or addition.

In some embodiments, the compilation-side device 10 may include, but is not limited to a personal computer, a server computer, a multi-processor system, and a microprocessor-based system.

In some embodiments, the running-side device 20 may include, but is not limited to a neural network processor or a neural network chip.

FIG. 1b is a schematic structural diagram of a compilation-side device 10 according to an embodiment of this disclosure. As shown in FIG. 1b, the compilation-side device 10 includes at least one processor 11 and a memory 12.

The processor 11 is configured to implement an instruction generation method for a neural network processor according to the embodiments of this disclosure. The processor 11 may be a processor that supports instruction sequence compilation for the neural network, or another form of processing unit having a compilation processing capability and/or an instruction execution capability.

The memory 12 may include one or more computer program products, which may include various forms of computer readable storage media. One or more computer program instructions may be stored on the computer readable storage medium. The processor 11 may execute the program instructions to implement the instruction generation method for data processing by a neural network processor described below.

In some embodiments, as shown in FIG. 1b, the compilation-side device 10 may further include an input device 13 and an output device 14. The input device 13 may include, for example, a keyboard and a mouse, for a compiler to input parameters of the neural network, such as a size of an input feature map, a size of an output feature map, and a convolution kernel at each layer of the neural network; and also to input to-be-processed data and the like. The output device 14 may include, for example, a display, a speaker, a printer, a communication network, and a remote output device connected by the communication network, for the compiler to view a final compilation result or intermediate data during a compilation process.

It should be noted that a specific structure of the compilation-side device 10 is not limited in the embodiments of this disclosure. The compilation-side device 10 may include more or fewer components than those shown in FIG. 1b. For example, the compilation-side device 10 may further include a bus, an input/output interface, and other components.

FIG. 1c is a schematic structural diagram of a running-side device 20 according to an embodiment of this disclosure. As shown in FIG. 1c, the running-side device 20 may include a control unit 21 and a calculation unit 22. The control unit 21 is configured to execute instructions to control the calculation unit 22 to perform data processing. In this application, the data processing may include data operations (such as multiplication and addition).

In some embodiments, the running-side device 20 may further include a buffer memory 23 and an off-chip memory 24. The buffer memory 23 may include one or more independent cache memories or a processing unit having a data caching capability, and may access the off-chip memory 24 under control of the control unit 21. The off-chip memory 24 may include one or more independent memories or a processing unit having a data storage capability, and may be accessed by the buffer memory 23 under control of the control unit 21.

It should be noted that a specific structure of the running-side device 20 is not limited in the embodiments of this disclosure. The running-side device 20 may include more or fewer components than those shown in FIG. 1c. For example, the running-side device 20 may further include a bus and other components.

Exemplary method 1

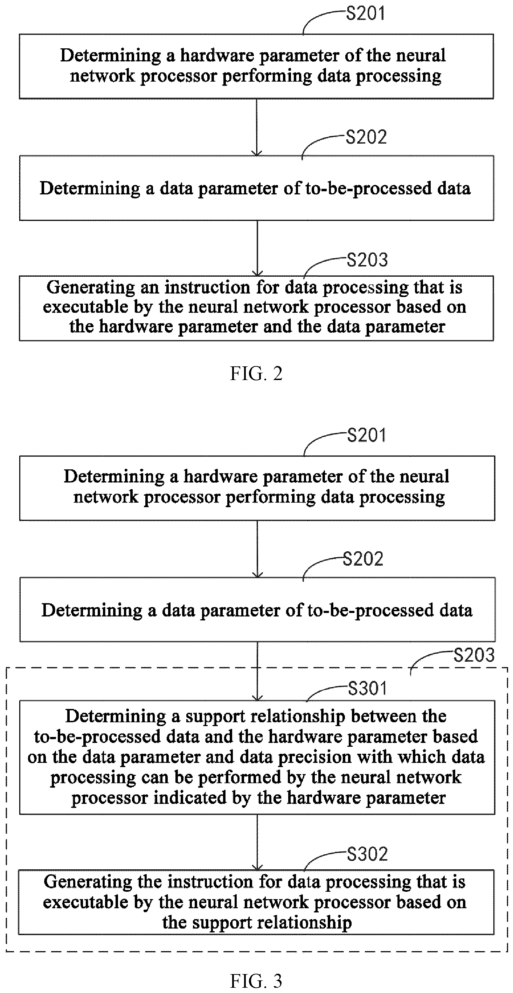

FIG. 2 is a schematic flowchart of an instruction generation method for data processing by a neural network processor according to an exemplary embodiment of this disclosure. This embodiment may be applied to a compilation-side device. As shown in FIG. 2, the following steps are included.

Step 201. Determining a hardware parameter of the neural network processor performing data processing.

The neural network processor may be any type of processor capable of performing operations. For example, the neural network processor may include a neural network processing unit (NPU). In this disclosure, the neural network processor may also be other types of processors, which is not limited in this disclosure.

The hardware parameter of the neural network processor includes a hardware parameter used for performing operations on data. For example, the hardware parameter may include a data type and a quantity of data bits of data that is supported by the neural network processor for operations.

For example, if the data supported by the neural network processor for operations is int8 data, the hardware parameter of the neural network processor is supporting operations on 8-bit signed integer data.

Step 202. Determining a data parameter of to-be-processed data, wherein the data parameter includes a data type including a signed integer and an unsigned integer and a quantity of data bits of the to-be-processed data.

For example, if the to-be-processed data is int16-type data, the data type of the to-be-processed data is a signed integer, and the quantity of data bits is 16. If the to-be-processed data is int32-type data, the data type of the to-be-processed data is a signed integer, and the quantity of data bits is 32.

The to-be-processed data may be image data or point cloud data, and may also be other data, which is not limited in this disclosure.

Step 203. Generating an instruction for data processing that is executable by the neural network processor based on the hardware parameter and the data parameter.

In a feasible design, the data processing performed by the neural network processor is an operation, and the instruction for data processing that is executable by the neural network processor enables the neural network processor to perform the operation on the to-be-processed data to obtain an accurate operation result.

Further, after the instruction for data processing that is executable by the neural network processor is generated by the compiling-side device, a running-side device may process the to-be-processed data based on the instruction to obtain a corresponding data processing result.

According to the instruction generation method for data processing by a neural network processor provided in this embodiment of this disclosure, the hardware parameter of the neural network processor and the data parameter of the to-be-processed data are comprehensively considered when generating the instruction for data processing that is executable by the neural network processor. Therefore, this disclosure can resolve a problem of poor accuracy of the data processing result when the neural network processor does not support data processing for high-bit signed integer data, thereby satisfying requirements of data processing for high-bit signed integer data.

The data processing may include operations. In this case, according to the solutions provided in this embodiment of this disclosure, the neural network processor can be enabled to perform operations on the high-bit signed integer data to improve accuracy of the operations, thereby satisfying requirements of the neural network processor for performing operations on the high-bit signed integer data.

The operation may include multiplication or addition, and certainly, may also include other operation performed on the higher-bit signed integer data. This is not limited in this embodiment of this application.

In a feasible design, as shown in FIG. 3, on the basis of the embodiment shown in FIG. 2, step 203 may include the following steps.

Step 301. Determining a support relationship between the to-be-processed data and the hardware parameter based on the data parameter and data precision with which data processing can be performed by the neural network processor indicated by the hardware parameter.

The data precision is used to represent precision of data that can be processed by the neural network processor when higher accuracy can be obtained. The data precision may be reflected by the data type and the quantity of data bits.

For example, if the neural network processor has high accuracy when processing int8-type data, the data precision with which data processing can be performed by the neural network processor indicated by the hardware parameter is 8-bit signed integer data.

In addition, there are two types of support relationships between the to-be-processed data and the hardware parameter. A first type of support relationship is that the hardware parameter does not support processing of the to-be-processed data. A second type of support relationship is that the hardware parameter supports processing of the to-be-processed data.

Not supporting the processing of the to-be-processed data refers to that the neural network processor corresponding to the hardware parameter does not support the processing of the to-be-processed data. Although the neural network processor is used to process the to-be-processed data, there is still a significant difference between an obtained processing result and an actual result. In other words, an accurate data processing result cannot be obtained.

In addition, supporting the processing of the to-be-processed data refers to that the neural network processor corresponding to the hardware parameter supports the processing of the to-be-processed data. The neural network processor is used to process the to-be-processed data, so that the obtained processing result is relatively close to the actual result. In other words, a relatively accurate data processing result can be obtained.

If the to-be-processed data is int16-type data and the hardware parameter indicates that the neural network processor only supports data processing of int8-type data, the support relationship between the to-be-processed data and the hardware parameter is the first type of support relationship. If the to-be-processed data is int8-type data and the hardware parameter indicates that the neural network processor only supports data processing of int8-type data, the support relationship between the to-be-processed data and the hardware parameter is the second type support relationship.

Step 302. Generating the instruction for data processing that is executable by the neural network processor based on the support relationship.

If the support relationship is the second type of support relationship, this instruction may be used to enable the neural network processor to directly perform the corresponding data processing.

In addition, if the support relationship is the first type of support relationship, in order to enable the neural network processor to obtain a more accurate data processing result, the to-be-processed data usually needs to be processed correspondingly, and then a corresponding instruction is generated based on the processed data.

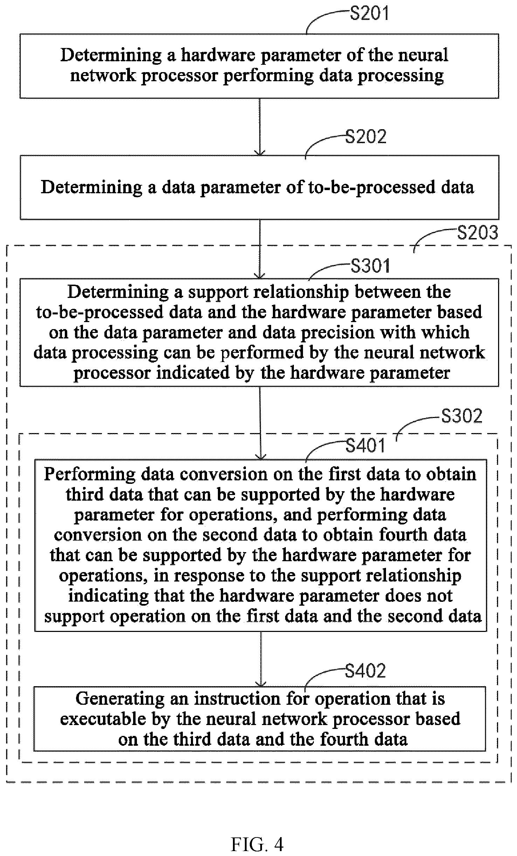

In an application scenario, the to-be-processed data includes first data and second data, and the data processing includes performing an operation on the first data and the second data. In this case, in a feasible design, as shown in FIG. 4, on the basis of the embodiment shown in FIG. 3, step 302 may include the following steps.

Step 401. Performing data conversion on the first data to obtain third data that can be supported by the hardware parameter for operations, and performing data conversion on the second data to obtain fourth data that can be supported by the hardware parameter for operations, in response to the support relationship indicating that the hardware parameter does not support operation on the first data and the second data.

For example, if both the first data and the second data are int16-type data, while the hardware parameter of the neural network processor indicates that the neural network processor only supports operation on int8-type data, the first data and the second data may be converted to int8-type data.

Step 402. Generating an instruction for operation that is executable by the neural network processor based on the third data and the fourth data.

Since both the third data and the fourth data can be supported by the hardware parameter of the neural network processor, this instruction may be generated through the third data and the fourth data.

If the hardware parameter of the neural network processor does not support the operation on the first data and the second data, according to the schemes disclosed in steps 401 to 402, data conversion may be performed on the first data and the second data separately to obtain the third data and the fourth data that are obtained through data conversion. Since the third data and the fourth data can be supported by the hardware parameter, the instruction for operation that is executable by the neural network processor may be generated based on the third data and the fourth data, thereby satisfying requirements for operations on higher-bit data.

In an application scenario, the neural network processor can only support operation on low-bit signed integer data, while the to-be-processed data is high-bit signed integer data. In this case, it is needed to convert the to-be-processed data into low-bit signed integer data through data conversion.

In a data conversion method provided in this disclosure, at least one of the first data and the second data may be used as first target data. A data type of the first target data is a signed integer, a quantity of data bits of the first target data is s, and the hardware parameter supports operation on signed integer data with t data bits, where s is twice of t, and both s and t are positive integers.

For example, t may be 8 and s may be 16. Alternatively, t may be 16 and s may be 32. Certainly, t and s may also be other positive integers, which is not limited in this disclosure.

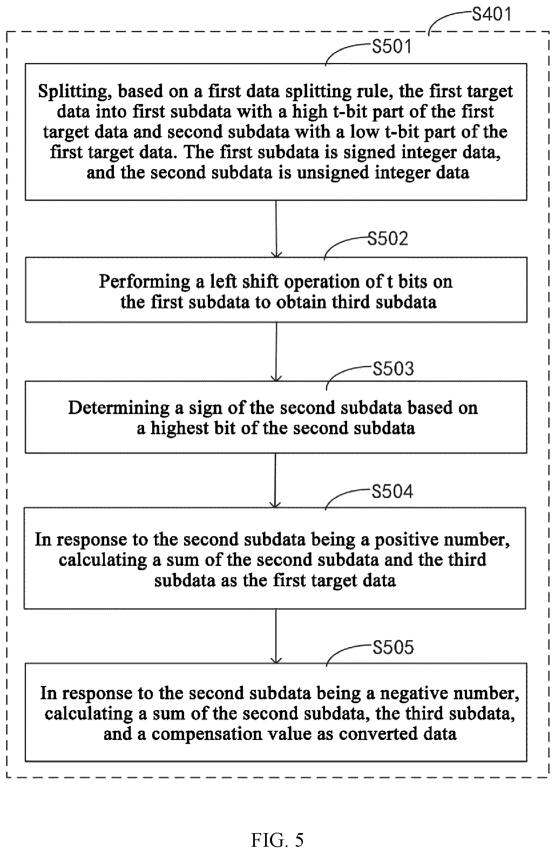

In this case as shown in FIG. 5, on the basis of the embodiment shown in FIG. 4, step 401 may include the following steps.

Step 501. Splitting, based on a first data splitting rule, the first target data into first subdata with a high t-bit part of the first target data and second subdata with a low t-bit part of the first target data. The first subdata is signed integer data, and the second subdata is unsigned integer data.

To be specific, in this step, the first target data is split into the first subdata and the second subdata according to the first data splitting rule. The first subdata is the t high bits of the first target data, and the second subdata is the t low bits of the first target data.

In addition, since the first target data is signed integer data, that is, a highest bit of the first target data may be used to represent a sign, and the first subdata includes the high t-bit part, a highest bit of the first subdata may also be used to represent a sign. In other words, the first subdata is signed integer data.

However, the second subdata is the low t-bit part, and a highest bit of the second subdata is used to represent a numerical value in the first target data, rather than a sign. Therefore, the second subdata cannot be directly regarded as signed integer data.

Step 502. Performing a left shift operation of t bits on the first subdata to obtain third subdata.

Since the first subdata has only t bits, to make a numerical value of the first subdata same as a numerical value of the first subdata that is represented in the first target data, a left shift operation of t bits may be performed on the first subdata. After shift calculation, the numerical value of the first subdata is same as a numerical value of the high t-bit part of the first target data.

Step 503. Determining a sign of the second subdata based on a highest bit of the second subdata.

If the highest bit of the second subdata is 1, the second subdata is a negative number and the operation in step 505 is performed. Alternatively, if highest bit of the second subdata is 0, the second subdata is a positive number and the operation in step 504 is performed.

Step 504. In response to the second subdata being a positive number, calculating a sum of the second subdata and the third subdata as the first target data.

In other words, the sum of the second subdata and the third subdata serves as converted data. If the first target data is the first data, the converted data is the third data. If the first target data is the second data, the converted data is the fourth data.

If the second subdata is a positive number, the second subdata may be regarded as t-bit signed integer data, and the sum of the second subdata and the third subdata may be used as the first target data.

Step 505. In response to the second subdata being a negative number, calculating a sum of the second subdata, the third subdata, and a compensation value as converted data, where the compensation value is 2 to the power of t.

If the second subdata is a negative number, it indicates that the highest bit of the second subdata (that is, a $(t+1)^{th}$ bit of the first target data) is 1. However, the $(t+1)^{th}$ bit of the first target data is only used to represent a numerical value, rather than a sign. Therefore, if the second subdata is regarded as a negative number, compensation may be made based on the sum of the second subdata and the third subdata through the compensation value. In other words, the sum of the second subdata, the third subdata, and the compensation value is used as the converted data.

If the first target data is the first data, the converted data is the third data. If the first target data is the second data, the converted data is the fourth data.

To be specific, in this embodiment, the first target data is split in half to obtain data of t low bits and data of t high bits. If the data of t low bits is a positive number, a left shift operation of t bits is performed on the data of t high bits, and then a sum of a result of the shift operation and the data of t low bits is used as the converted data. If the data of t low bits is a negative number, a left shift operation of t bits is performed on the data of t high bits, and then a sum of the result of the shift operation, the data of t low bits, and the compensation value is used as the converted data. The compensation value is 2 to the power of t.

Description is made by using a formula. If it is set that A1 represents the first target data, A1 may be split into two parts $D_{t1}$ and $D_{t0}$. $D_{t1}$ is the t high bits of A1, and $D_{t0}$ is the t low bits of A1.

If the highest bit of $D_{t0}$ is 1, that is, $D_{t0}$ is a negative number, $A1 = (int\ t)\ (D_{t1}<<t) + 2^t + (int\ t)\ D_{t0}$. int t represents that the data is of a type of int t; $D_{t1}<<t$ represents data obtained by performing a left shift operation of t bits on $D_{t1}$; (int t) ($D_{t1}<<t$) represents int t-type data obtained by performing a left shift operation of t bits on $D_{t1}$; $2^t$ represents the compensation value; and (int t) $D_{t0}$ represents that $D_{t0}$ is int t-type data.

If the highest bit of $D_{t0}$ is 0, that is, $D_{t0}$ is a positive number, $A1 = (int\ t)\ (D_{t1}<<t) + (int\ t)\ D_{t0}$.

According to the schemes in steps 501 to 505, in a case where data types supported by the first target data and the hardware parameter of the neural network processor are both signed integers, and the quantity of data bits of the first target data is twice of the quantity of data bits supported by the hardware parameter, data conversion may be performed on the first data and the second data, respectively, to obtain the corresponding third data and fourth data, so that the neural network processor performs operations on the third data and the fourth data, thereby satisfying requirements of the neural network processors for performing operations on high-bit data.

To clarify the schemes provided in steps 501 to 505, an example is disclosed below. In this example, the first target data satisfies that a = 0x1af4, where 0x1af4 represents int16-type data. "x" indicates that the data is hexadecimal data, and hexadecimal notation is usually represented by using numbers 0, 1, 2, 3, 4, 5, 6, 7, 8, and 9 and letters A, B, C, D, E, and F (or a, b, c, d, e, and f). If A-F (or a-f) represent 10-15 in decimal notation, "a" in 0x1af4 represents 10 in the decimal notation, and "f" represents 15 in the decimal notation. A numerical value of this data in the decimal notation is 6900 (that is, 4 + 15 × 16 + 10 × 16 × 16 + 16 × 16 × 16 = 6900). Moreover, the hardware parameter of the neural network processor only supports operations on int8-type data.

The first subdata and the second subdata may be obtained first in the process of performing data conversion on the first target data based on the schemes provided in steps 501 to 505. The first subdata is 0x1a and is int8-type data, and the second subdata is 0xf4 and is a negative number.

The third subdata is obtained by performing a left shift operation of t bits on the first subdata. The third subdata may be expressed as (0x1a (int8)<<8, where int8 indicates that the third subdata is int8-type data.

In addition, since the second subdata is a negative number, the compensation value is required when obtaining the converted data. The compensation value is 2 to the power of 8, which may be expressed as 0x1 (int8)<<8. This equation indicates that a numerical value of the compensation value is a numerical value obtained by performing a left shift operation of 8 bits on 0x1. int8 indicates that the compensation value is int8-type data. The second subdata may be expressed as 0xf4 (int8), where int8 indicates that the second subdata is int8-type data.

In this case, the converted data may be expressed as (0x1a (int8)<<8 + 0x1 (int8)<<8 + 0xf4 (int8)). Further, (0x1a (int8)<<8 + 0x1 (int8)<<8 + 0xf4 (int8)) = (26 + 1) * 256-12 = 6912-12 = 6900.

On this basis, it may be learned that both the first target data and the converted data are 6900, and the two are equal. In other words, through the solutions provided in this disclosure, data conversion may be performed on the first target data to obtain data that satisfies requirements for operations of the neural network processor.

In another data conversion method provided in this disclosure, at least one of the first data and the second data may be used as second target data. A data type of the second target data is a signed integer, a quantity of data bits of the second target data is g, and the hardware parameter supports operations on signed integer data with h data bits, wherein both g and h are positive integers.

g may be an integer multiple of h. For example, h may be 8, and g may be 16, 32, or 64. Alternatively, h may be 16, and g may be 32 or 64. Alternatively, g may not be an integer multiple of h. For example, h may be 8, and g may be 20. Certainly, g and h may also be other positive integers, which is not limited in this disclosure.

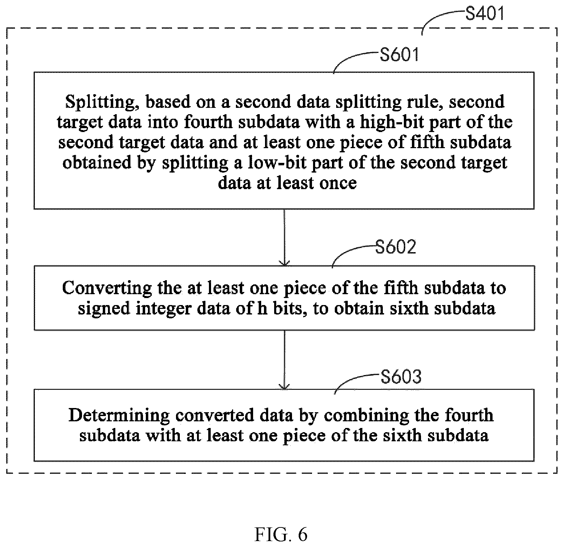

In this case, as shown in FIG. 6, on the basis of the embodiment shown in FIG. 4, step 401 may include the following steps.

Step 601. Splitting, based on a second data splitting rule, second target data into fourth subdata with a high-bit part of the second target data and at least one piece of fifth subdata obtained by splitting a low-bit part of the second target data at least once.

To be specific, the second target data is split into fourth subdata and at least one piece of fifth subdata based on the second data splitting rule. The fourth subdata is data with the high-bit part of the second target data, and the at least one piece of fifth subdata is data obtained by splitting the low-bit part of the second target data at least once.

A quantity of data bits of the low-bit part of the second target data corresponding to each piece of fifth subdata is different, the fourth subdata is signed integer data, the fifth subdata is unsigned integer data, each piece of fifth subdata has h bits, and a quantity of bits of the fourth subdata is not greater than h.

In a case of this embodiment, g is an integer multiple of h. If it is set that g = k * h, where k is a positive integer, the second target data may be split into k pieces of subdata, and a quantity of data bits of each piece of subdata is h. The fourth subdata is a high h-bit part of the second target data, and there are (k-1) pieces of fifth subdata.

In an example, the second target data is 32-bit signed integer data, that is, g is 32. However, the hardware parameter of the neural network processor only supports operations on 8-bit signed integer data, that is, h is 8. In this case, the fourth subdata is a high 8-bit part of the second target data, and there are 3 pieces of fifth subdata. If the second target data is split from left to right, a first piece of fifth subdata is a part including 9th-16th bits of the second target data, a second piece of fifth subdata is a part including 17th-24th bits of the second target data, and a third piece of fifth subdata is a part including 25th-32nd bits of the second target data.

Alternatively, in another case, if g is not an integer multiple of h, after the second target data is split, each piece of fifth subdata has h bits, and a quantity of bits of the fourth subdata is less than h.

In this case, in an actual splitting process, splitting may be performed from low bits to high bits, and remaining data with a quantity of bits less than h after last splitting is the fourth subdata. Alternatively, zeros may be padded at high bits of the second target data, so that a quantity of data bits of the padded second target data is a positive integer multiple of h, and then splitting is performed to obtain multiple pieces of h-bit data. Data of h highest bits is the fourth subdata.

For example, if h is 8 and g is 12, four zeros may be padded at the high bits of the second target data, so that a quantity of bits of the padded second target data is 16, and then splitting is performed. In this case, the fourth subdata and the fifth subdata obtained through splitting both have 8 bits.

In addition, a highest bit of the fourth subdata is a highest bit of the second target data and may be used to represent a sign of the data. Therefore, the fourth subdata may be regarded as signed integer data. A highest bit of each piece of fifth subdata is not the highest bit of the second target data and cannot be used to represent the sign of the data. In this case, the fifth subdata may be regarded as unsigned integer data.

Step 602. Converting the at least one piece of the fifth subdata to signed integer data of h bits, to obtain sixth subdata.

Since the fifth subdata is unsigned integer data, it is needed to perform data conversion on the fifth subdata to obtain the corresponding sixth subdata, which is signed integer data.

Step 603. Determining converted data by combining the fourth subdata with at least one piece of the sixth subdata.

In the embodiments of this disclosure, both the fourth subdata and the sixth subdata have h bits, and numerical values thereof in the second target data may be different from numerical values represented by the fourth subdata and the sixth subdata per se. Therefore, in the combination process, it is needed to first perform left shift operations based on positions of the fourth subdata and the sixth subdata in the second target data, and then results of the shift operations are combined. Combining the results of the shift operations refers to adding the results of the shift operations.

In the case that the fourth subdata is the high h-bit part of the second target data, when performing a shift operation on the fourth subdata, a left shift operation of (g-h) bits is usually performed on the fourth subdata. If the second target data is split from left to right, a left shift operation of (g-2h) bits is performed on a first piece of sixth subdata corresponding to the fifth subdata obtained through shifting; a left shift operation of (g-3h) bits is performed on a second piece of sixth subdata corresponding to the fifth subdata obtained through shifting; and the others may be deduced by analogy. Shifting processing is not performed on a last piece of sixth subdata, or it may be considered that a left shift operation of (g-k * h) bits is performed on the last piece of sixth subdata.

Subsequently, after the shift operations, the results obtained from the shift operations are combined to obtain the converted data. If the second target data is the first data, the converted data is the third data. If the second target data is the second data, the converted data is the fourth data.

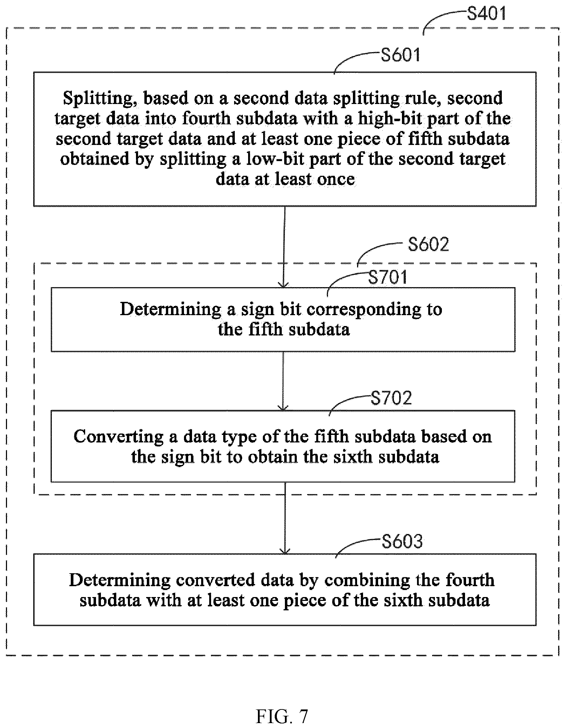

In step 602, the step of converting the at least one piece of the fifth subdata to h-bit signed integer data, to obtain the sixth subdata is disclosed. As shown in FIG. 7, on the basis of the embodiment shown in FIG. 6, step 602 can include the following steps.

Step 701. Determining a sign bit corresponding to the fifth subdata. The sign bit is used to convert a data type of the fifth subdata from an unsigned integer to a signed integer.

In the embodiments of this disclosure, the sign bit may be determined in various ways. In one way, the sign bit may be determined based on whether a numerical value of the fifth subdata exceeds a value range of int-type data. If the numerical value of the fifth subdata exceeds the value range of int-type data, it may be determined that a value of the corresponding sign bit is -1. If the numerical value of the fifth subdata does not exceed the value range of int-type data, it may be determined that the value of the corresponding sign bit is 0.

In an example, the fifth subdata is matrix data $\begin{bmatrix} 128 & 127 & 126 \\ 131 & 132 & 133 \\ 255 & 254 & 253 \end{bmatrix}$ with a data type of uint8, which needs to be converted to int8-type data. In this matrix, each piece of data is represented by a decimal number corresponding to each binary number, that is, 128, 127, 126, 131, 132, 133, 255, 254, and 253 are all decimal numbers corresponding to binary numbers of pixel values.

In the foregoing matrix B, 128, 131, 132, 133, 255, 254, and 253 all exceed the value range (-128, 127) of the int8-type data. Therefore, a corresponding element in the sign bit may be determined as -1. However, 127 and 126 does not exceed the value range of the int8-type data. Therefore, the corresponding element in the sign bit may be determined as 0.

In this case, the obtained sign bit is $\begin{bmatrix} -1 & 0 & 0 \\ -1 & -1 & -1 \\ -1 & -1 & -1 \end{bmatrix}$.

Alternatively, in another way, the sign bit may be determined through the following operations.

Step 1. Performing overflow and saturation processing on the binary value to obtain first processed data, if a binary value of the fifth subdata exceeds a binary value range of the signed integer.

$$A = \begin{bmatrix} 128 & 127 & 126 \\ 131 & 132 & 133 \\ 255 & 254 & 253 \end{bmatrix}$$

In an example, if the fifth subdata is with a data type of uint8, the fifth subdata needs to be converted to int8-type sixth subdata. Since the value range of the int8-type data is (-128, 127), overflow and saturation processing may be performed on elements in the matrix A that exceed the maximum value 127. Thus, the first

processed data $A^* = \begin{bmatrix} -128 & 127 & 126 \\ -125 & -124 & -123 \\ -1 & -2 & -3 \end{bmatrix}$ may be obtained. The overflow and saturation processing is to subtract 256 from each pixel value that exceeds the value range of the int8 data to obtain the first processed data.

Step 2. Negating the binary value of the processed data and then subtract one therefrom, to obtain second processed data.

In an example, each binary value in the first processed data $A^* = \begin{bmatrix} -128 & 127 & 126 \\ -125 & -124 & -123 \\ -1 & -2 & -3 \end{bmatrix}$ is negated and then is subtracted by 1, that is, A* * (-1) - 1. In this case, the corresponding second processed data

$A^{\sim} = \begin{bmatrix} 127 & -128 & -127 \\ 124 & 123 & 122 \\ 0 & 1 & 2 \end{bmatrix}$ may be obtained.

Step 3. Performing a right shift operation of f bits on the second processed data to determine the sign bit, wherein f represents a value obtained by subtracting 1 from a bit value corresponding to a byte occupied by the fifth subdata.

In an example, f is 7 if the fifth subdata is unit8-type data and the bit value corresponding to the byte occupied by the fifth subdata is 8. In this case, the second processed data is shifted to the right by 7 bits, and the obtained sign bit is B =

$\begin{bmatrix} 0 & -1 & -1 \\ 0 & 0 & 0 \\ 0 & 0 & 0 \end{bmatrix}$.

The sign bit corresponding to the fifth subdata may be determined through the foregoing operations. In addition, after the sign bit is determined, the operation of step 702 may be continued.

Step 702. Converting a data type of the fifth subdata based on the sign bit to obtain the sixth subdata.

A quantity of data bits of the fifth subdata is same as that of the sixth subdata. To be specific, if the fifth subdata is 8-bit unsigned integer data (that is, unit8-type data), the sixth subdata is 8-bit signed integer data (that is, int8-type data).

In a feasible design, step 702 may be implemented through the following operations.

Step 1. Determining a compensation parameter based on a binary value range of data supported by the hardware parameter of the neural network processor, wherein the compensation parameter is half of a quantity of values in the binary value range.

For example, if a data type supported by the hardware parameter of the neural network processor is int8 and a corresponding binary value range is (-128, 127), the quantity of values in this binary value range is 256, and correspondingly, the compensation parameter is 128.

Step 2. Multiplying the sign bit by the quantity of binary numbers in the binary value range to obtain a sign conversion bit.

The quantity of binary numbers in this binary value range is a value obtained by shifting a binary digit 1 to the left based on a bit value of the fifth subdata.

$$A = \begin{bmatrix} 128 & 127 & 126 \\ 131 & 132 & 133 \\ 255 & 254 & 253 \end{bmatrix}$$

Take the fifth subdata being $A = \begin{bmatrix} 128 & 127 & 126 \\ 131 & 132 & 133 \\ 255 & 254 & 253 \end{bmatrix}$ as an example again. If the data type of the fifth subdata is uint8 and the corresponding bit value is 8, the binary digit 1 is shifted to the left by 8 bits to obtain the quantity of binary numbers in the binary value range. In this example, the quantity is 256.

Correspondingly, the sign conversion bit is

$$T = B * 256 = \begin{bmatrix} 0 & -1 & -1 \\ 0 & 0 & 0 \\ 0 & 0 & 0 \end{bmatrix} * 256 = \begin{bmatrix} 0 & -256 & -256 \\ 0 & 0 & 0 \\ 0 & 0 & 0 \end{bmatrix}.$$

Step 3. Adding the compensation parameter, the sign conversion bit, and first processed data to obtain the sixth subdata.

That is, C = A* + T + Y, wherein C represents the sixth subdata, A* represents the first processed data, T represents the sign conversion bit, and Y represents the compensation parameter.

$$A = \begin{bmatrix} 128 & 127 & 126 \\ 131 & 132 & 133 \\ 255 & 254 & 253 \end{bmatrix}$$

If that the fifth subdata is $A = \begin{bmatrix} 128 & 127 & 126 \\ 131 & 132 & 133 \\ 255 & 254 & 253 \end{bmatrix}$ is used as an example again, it is satisfied that

$$C = \begin{bmatrix} -128 & 127 & 126 \\ -125 & -124 & -123 \\ -1 & -2 & -3 \end{bmatrix} + \begin{bmatrix} 0 & -256 & -256 \\ 0 & 0 & 0 \\ 0 & 0 & 0 \end{bmatrix} + 128 = \begin{bmatrix} 0 & -1 & -2 \\ 3 & 4 & 5 \\ 127 & 126 & 125 \end{bmatrix}. \text{ In}$$

other words, the sixth subdata is $\begin{bmatrix} 0 & -1 & -2 \\ 3 & 4 & 5 \\ 127 & 126 & 125 \end{bmatrix}$.

According to the foregoing embodiments, the second target data may be converted to obtain converted data that is supported by the hardware parameter of the neural network processor.

In another embodiment of this disclosure, a formula for data conversion of the to-be-processed data is further provided. In this embodiment, it is set that the hardware parameter of the neural network processor supports data processing for x-bit signed integer data. y represents a quantity of data bits of the to-be-processed data, and is signed integer data. Both x and y are positive integers. For example, x may be 8, and y may be 12, 16, or 32.

In this case, if it is set that A2 represents the second target data, A2 may be split according to the second data splitting rule. The fourth subdata obtained by splitting A2 is $D_{xn}$, which represents a quantity of highest x bits (signed number). The fifth subdata includes $D_{xn-1}$, ..., $D_{xi}$, ..., $D_{x1}$, and $D_{x0}$, where $D_{x0}$ represents a quantity of lowest x bits (unsigned number) in A2, $D_{x1}$ represents a quantity of second lowest x bits (unsigned number) in A2, and the others may be deduced by analogy. $D_{xn-1}$ represents a quantity of highest x bits (unsigned number) in the fifth subdata.

It is satisfied that $n = \lceil (y + x - 1)/x \rceil$ or n = float div [(y + x-1)/x]. The two formulas both indicate that a calculation result of (y + x - 1)/x is rounded up.

Alternatively, if y is a multiple of x, where a is a positive integer, it may also be set that n = a-1. For example, if x is 8, y is 16 or 32, a is 2 or 4, and n is 1 or 3.

In addition, $D_{x0}$ represents the quantity of lowest x bits (unsigned number) in A2, $D_{x1}$ represents the quantity of second lowest x bits (unsigned number) in A2, ... $D_{xi}$ represents a quantity of (i-1) second lowest x bits (unsigned number) in A2, ..., and the others may be deduced by analogy. $D_{xn}$ represents a quantity of highest x bits (signed number). In this case, $D_{xn}$ may be regarded as the fourth subdata, and other data obtained through splitting (such as $D_{x0}$, $D_{x1}$, and $D_{xi}$) may be regarded as the fifth subdata.

In this embodiment, if y is not a positive integer multiple of x, when the second target data is split according to the second data splitting rule, zeros may be padded at high bits of the second target data, so that the quantity of data bits of the padded second target data is a positive integer multiple of x, and then splitting may be performed.

For example, if x is 8 and y is 12, four zeros may be padded at the high bits of the second target data, so that the quantity of bits of the padded second target data is 16, and then splitting is performed.

If it is set that the converted data obtained by converting the fifth subdata $D_{xi}$ is $D_{xi}'$, it is satisfied that $D_{xi}' = (F_{xi} << 2^{x * (i+1)}) + 2^{(x * (i + 1) - 1)}$. In this formula, $D_{xi}$ represents the fifth subdata, x represents the quantity of data bits supported by the hardware parameter of the neural network processor, and $F_{xi}$ represents a numerical part of $D_{xi}$. For example, if x is 8, y is 24, i is 1, and the second target data is represented in the binary notation as 11010011 11000110 01011100, $F_{xi}$ is 11000110, $<<2^{x * (i + 1)}$ represents a left shift operation of x * (i + 1) bits, and $2^{(x * (i + 1) - 1)}$ represents compensation for $D_{xi}$ during the conversion process.

In this case, the following formula for data conversion may be obtained:

$$A2 = (F_{xn} << 2^{x * (n + 1)}) + 2^{(x * (n + 1) - 1)} + (F_{xn-1} << 2^{x * n}) + 2^{(x * (n) - 1)} + ... + (F_{xi} << 2^{x * (i + 1)}) + 2^{(x * (i + 1) - 1)} + ... + (F_{x1} << 2^{x + 2}) + 2^{(x * 2 - 1)} + (F_{x0} << 2^{x}) + 2^{(x - 1)}.$$

$(F_{xn} << 2^{x * (n + 1)}) + 2^{(x * (n + 1) - 1)}$ represents a conversion result of $D_{xn}$; $(F_{xn - 1} << 2^{x * n}) + 2^{(x * (n) - 1)}$ represents a conversion result of $D_{xn-1}$; $(F_{xi} << 2^{x * (1 + 1)}) + 2^{(x * (i + 1) - 1)}$ represents a conversion result of $D_{xi}$; $(F_{x1} << 2^{x * 2}) + 2^{(x * 2 - 1)}$ represents a conversion result of $D_{x1}$; and $(F_{x0} << 2^{x}) + 2^{(x - 1)}$ represents a conversion result of $D_{x0}$.

Exemplary method 2

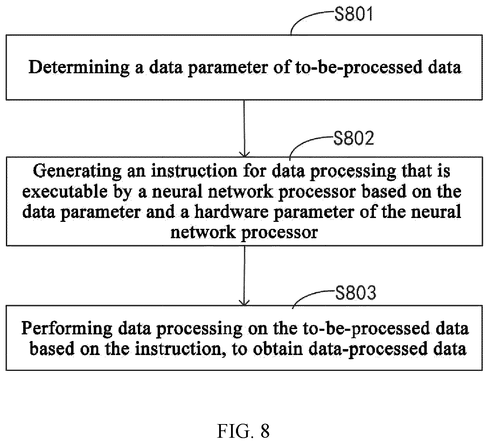

Correspondingly, a data processing method is further disclosed in another embodiment of this disclosure. This method may be applied to a neural network processor. Referring to the schematic diagram shown in FIG. 8, the method includes the following steps.

Step 801. Determining a data parameter of to-be-processed data, wherein the data parameter includes a data type and a quantity of data bits of the to-be-processed data, and the data type includes a signed integer and an unsigned integer.

Step 802. Generating an instruction for data processing that is executable by a neural network processor based on the data parameter and a hardware parameter of the neural network processor.

If the quantity of data bits of the to-be-processed data is larger than a quantity of data bits that can be processed by the hardware parameter of the neural network processor, this instruction may be used to perform data conversion on the to-be-processed data, so as to convert the to-be-processed data into data that can be processed by the hardware parameter of the neural network processor.

For the manner for generating the instruction for data processing that is executable by the neural network processor, reference may be made to the foregoing embodiments, and details are not described in this embodiment of this disclosure again.

Step 803. Performing data processing on the to-be-processed data based on the instruction, to obtain data-processed data.

According to the solutions provided in this embodiment of this disclosure, the neural network processor can implement the processing for the to-be-processed data, thereby resolving a problem in related technologies that high-bit data cannot be processed.

The data processing may include operations. In this case, according to the solutions provided in this embodiment of this disclosure, the neural network processor can be enabled to perform operations on high-bit signed integer data, thereby satisfying requirements of the neural network processor for performing operations on the high-bit signed integer data.

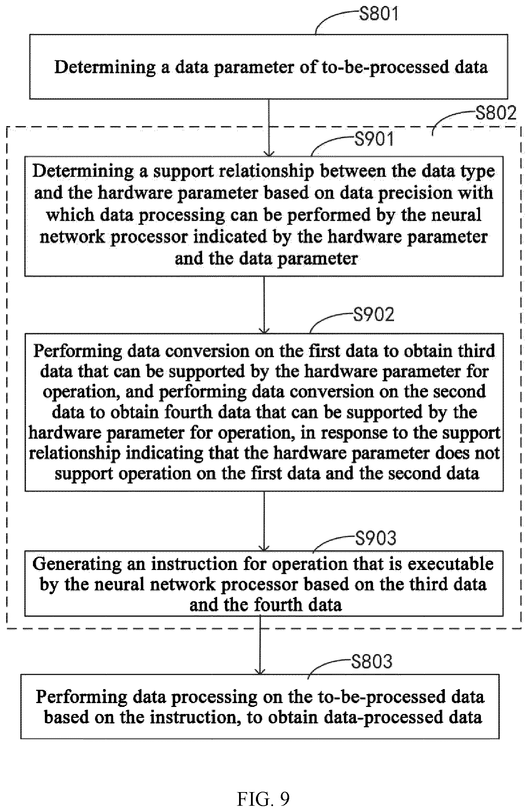

In an application scenario of this disclosure, the to-be-processed data includes first data and second data, and the data processing includes performing an operation on the first data and the second data. In this case as shown in FIG. 9, on the basis of the embodiment shown in FIG. 8, step 802 may include the following steps.

Step 901. Determining a support relationship between the data type and the hardware parameter based on data precision with which data processing can be performed by the neural network processor indicated by the hardware parameter and the data parameter.

There are two types of support relationships between the to-be-processed data and the hardware parameter. A first type of support relationship is that the hardware parameter does not support processing for the to-be-processed data. A second type of support relationship is that the hardware parameter supports processing for the to-be-processed data.

Step 902. Performing data conversion on the first data to obtain third data that can be supported by the hardware parameter for operation, and performing data conversion on the second data to obtain fourth data that can be supported by the hardware parameter for operation, in response to the support relationship indicating that the hardware parameter does not support operation on the first data and the second data.

For the manner for performing data conversion on the first data and the second data, reference may be made to the foregoing embodiments, and details are not described in this embodiment of this disclosure again.

Step 903. Generating an instruction for operation that is executable by the neural network processor based on the third data and the fourth data.

If the hardware parameter of the neural network processor does not support the operation on the first data and the second data, according to this solution, data conversion may be performed on the first data and the second data, respectively to obtain the third data and the fourth data that are obtained through data conversion. Since the third data and the fourth data can be supported by the hardware parameter, the instruction for operation that is executable by the neural network processor may be generated based on the third data and the fourth data, thereby satisfying requirements for operations on higher-bit data.

Exemplary apparatus 1

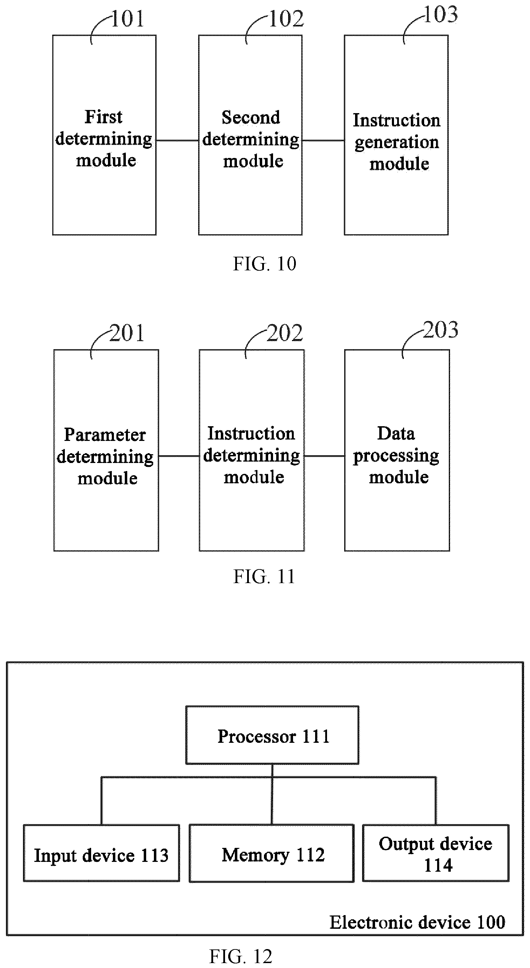

FIG. 10 is a structural diagram of an instruction generation apparatus for data processing by a neural network processor according to an exemplary embodiment of this disclosure. The instruction generation apparatus for data processing by a neural network processor may be disposed in the neural network processor to implement the instruction generation method for data processing by a neural network processor according to any embodiment of this disclosure.

As shown in FIG. 10, the instruction generation apparatus for data processing by a neural network processor includes a first determining module 101, a second determining module 102, and an instruction generation module 103.

The first determining module 101 is configured to determine a hardware parameter of the neural network processor performing data processing.

The second determining module 102 is configured to determine a data parameter of to-be-processed data, wherein the data parameter includes a data type and a quantity of data bits of the to-be-processed data, and the data type includes a signed integer and an unsigned integer.

The instruction generation module 103 is configured to generate an instruction for data processing that is executable by the neural network processor based on the hardware parameter determined by the first determining module 101 and the data parameter determined by the second determining module 102.

In a feasible design, the instruction generation module 103 is configured to determine a support relationship between the to-be-processed data and the hardware parameter based on the data parameter and data precision with which data processing can be performed by the neural network processor indicated by the hardware parameter; and generate the instruction for data processing that is executable by the neural network processor based on the support relationship.

For example, the to-be-processed data includes first data and second data, and the data processing includes performing an operation on the first data and the second data. The instruction generation module 103 generates the instruction for data processing that is executable by the neural network processor based on the support relationship by performing the following:

performing data conversion on the first data to obtain third data that can be supported by the hardware parameter for operations, and performing data conversion on the second data to obtain fourth data that can be supported by the hardware parameter for operations, in response to the support relationship indicating that the hardware parameter does not support an operation on the first data and the second data; and
generating an instruction for operation that is executable by the neural network processor based on the third data and the fourth data.

In a feasible design, at least one of the first data and the second data is used as first target data, a data type of the first target data is a signed integer, a quantity of data bits of the first target data is $s$, and the hardware parameter supports operations on signed integer data with $t$ data bits, where $s$ is twice of $t$, and both $s$ and $t$ are positive integers. In this case, the instruction generation module 103 performs data conversion on the first data to obtain the third data that can be supported by the hardware parameter for operations, and performs data conversion on the second data to obtain the fourth data that can be supported by the hardware parameter for operations by performing the following:

splitting, based on a first data splitting rule, the first target data into first subdata with a high $t$-bit part of the first target data and second subdata with a low $t$-bit part of the first target data, wherein the first subdata is signed integer data;
performing a left shift operation of $t$ bits on the first subdata to obtain third subdata;
determining a sign of the second subdata based on a highest bit of the second subdata; and
in response to the second subdata being a positive number, calculating a sum of the second subdata and the third subdata as the first target data; or
in response to the second subdata being a negative number, calculating a sum of the second subdata, the third subdata, and a compensation value as converted data, wherein the compensation value is 2 to the power of $t$.

In a feasible design, at least one of the first data and the second data is used as second target data, a data type of the second target data is signed integer data, a quantity of data bits of the second target data is g, and the hardware parameter supports operations on signed integer data with h data bits, wherein g is an integer multiple of h, and both g and h are positive integers. In this case, the instruction generation module 103 performs data conversion on the first data to obtain the third data that can be supported by the hardware parameter for operations, and performs data conversion on the second data to obtain the fourth data that can be supported by the hardware parameter for operations by performing the following:

splitting, based on a second data splitting rule, the second target data into fourth subdata with a high-bit part of the second target data and at least one piece of fifth subdata obtained by splitting a low-bit part of the second target data at least once, a quantity of data bits of the low-bit part of the second target data corresponding to each piece of fifth subdata is different, the fourth subdata is signed integer data, the fifth subdata is unsigned integer data, each piece of fifth subdata has h bits, and a quantity of bits of the fourth subdata is not greater than h;
converting the at least one piece of the fifth subdata to signed integer data with h bits, to obtain sixth subdata; and
determining the converted data by combining the fourth subdata with at least one piece of the sixth subdata.

The hardware parameter of the neural network processor and the data parameter of the to-be-processed data are comprehensively considered by the instruction generation apparatus for data processing by a neural network processor provided in this embodiment of this disclosure when generating the instruction for data processing that is executable by the neural network processor. Therefore, this disclosure can resolve a problem of poor accuracy of a data processing result when the neural network processor does not support data processing for high-bit signed integer data, so that requirements of data processing for high-bit signed integer data can be satisfied.

The data processing may include operations. In this case, according to the solutions provided in this embodiment of this disclosure, the neural network processor can be enabled to perform operations on the high-bit signed integer data to improve accuracy of the operations, thereby satisfying requirements of the neural network processor for performing operations on the high-bit signed integer data.

Exemplary apparatus 2

FIG. 11 is a structural diagram of a data processing apparatus according to an exemplary embodiment of this disclosure. The data processing apparatus may be configured to implement the data processing method according to the foregoing embodiment of this disclosure.

As shown in FIG. 11, the data processing apparatus in this embodiment includes a parameter determining module 201, an instruction determining module 202, and a data processing module 203.

The parameter determining module 201 is configured to determine a data parameter of to-be-processed data, wherein the data parameter includes a data type and a quantity of data bits of the to-be-processed data, and the data type includes a signed integer and an unsigned integer;

The instruction determining module 202 is configured to generate an instruction for data processing that is executable by a neural network processor based on the data parameter determined by the parameter determining module 201 and a hardware parameter of the neural network processor.

The data processing module 203 is configured to process the to-be-processed data based on the instruction determined by the instruction determining module 202, to obtain processed data.

In a feasible design, the to-be-processed data includes first data and second data, and the data processing includes performing an operation on the first data and the second data. The instruction determining module 202 generates the instruction for data processing that is executable by the neural network processor based on the data parameter and the hardware parameter of the neural network processor by performing the following:

determining a support relationship between the data type and the hardware parameter based on data precision with which data processing can be performed by the neural network processor indicated by the hardware parameter and the data parameter;
performing data conversion on the first data to obtain third data that can be supported by the hardware parameter for operations, and performing data conversion on the second data to obtain fourth data that can be supported by the hardware parameter for operations, in response to the support relationship indicating that the hardware parameter does not support operations on the first data and the second data; and
generating an instruction for data processing that is executable by the neural network processor based on the third data and the fourth data.

According to the solutions provided in this embodiment of this disclosure, the neural network processor can implement the processing for the to-be-processed data, thereby resolving a problem in related technologies that high-bit data cannot be processed.

The data processing may include operations. In this case, according to the solutions provided in this embodiment of this disclosure, the neural network processor can be enabled to perform an operation on high-bit signed integer data, thereby satisfying requirements of the neural network processor for performing operations on the high-bit signed integer data.

Exemplary electronic device

FIG. 12 is a structural diagram of an electronic device 100 according to an embodiment of this disclosure. The electronic device 100 includes at least one processor 111 and a memory 112.

The processor 111 may be a neural network processor or another form of processing unit having a data processing capability and/or an instruction execution capability, and can control another component in the electronic device 100 to perform a desired function.

The memory 112 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage media. The processor 111 may execute the one or more program instructions to implement the instruction generation method for data processing by a neural network processor, the data processing method, and/or other desired functions according to the various embodiments of this disclosure that are described above.

In an example, the electronic device 100 may further include an input device 13 and an output device 14. These components are connected to each other through a bus system and/or another form of connection mechanism (not shown).

The input device 113 may further include, for example, a keyboard and a mouse.

The output device 114 may output various information to the outside, and may include, for example, a display, a speaker, a printer, a communication network, and a remote output device connected to the communication network.

Certainly, for simplicity, FIG. 10 shows only some of components in the electronic device 100 that are related to this disclosure, and components such as a bus and an input/output interface are omitted. In addition, according to specific application situations, the electronic device 100 may further include any other appropriate components.

Exemplary computer program product and computer readable storage medium

In addition to the foregoing methods and devices, embodiments of this disclosure may also provide a computer program product, which includes computer program instructions. When the computer program instructions are executed by a processor, the processor is enabled to perform the steps, of the instruction generation method for data processing by a neural network processor and/or the data processing method according to the embodiments of this disclosure, that are described in the "exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium storing computer program instructions thereon. When the computer program instructions are run by the processor, the processor is enabled to perform the steps, of the instruction generation method for data processing by a neural network processor and/or the data processing method according to the embodiments of this disclosure, that are described in the "exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this disclosure. In this way, if these modifications and variations of this disclosure fall within the scope of the claims and equivalent technologies of the claims of this disclosure, this disclosure also intends to include these modifications and variations.

**Claims**

1. An instruction generation method for data processing by a neural network processor, comprising:

    determining a hardware parameter of the neural network processor performing data processing;
    determining a data parameter of to-be-processed data, wherein the data parameter comprises a data type and a quantity of data bits of the to-be-processed data; and
    generating an instruction for data processing that is executable by the neural network processor based on the hardware parameter and the data parameter.

2. The method according to claim 1, wherein the generating an instruction for data processing that is executable by the neural network processor based on the hardware parameter and the data parameter comprises:

    determining a support relationship between the to-be-processed data and the hardware parameter based on the data parameter and data precision with which data processing can be performed by the neural network processor indicated by the hardware parameter; and
    generating the instruction for data processing that is executable by the neural network processor based on the support relationship.

3. The method according to claim 2, wherein the to-be-processed data comprises first data and second data, the data processing comprises performing an operation on the first data and the second data, and the generating the instruction for data processing that is executable by the neural network processor based on the support relationship comprises:

    performing data conversion on the first data to obtain third data that can be supported by the hardware parameter for operations, and performing data conversion on the second data to obtain fourth data that can be supported by the hardware parameter for operations, in response to the support relationship indicating that the hardware parameter does not support operation on the first data and the second data; and
    generating an instruction for operation that is executable by the neural network processor based on the third data and the fourth data.

4. The method according to claim 3, wherein at least one of the first data and the second data is used as first target data, which has a data type of a signed integer, and a quantity of data bits of s, and the hardware parameter supports an operation on signed integer data with t data bits, wherein s is twice of t, and both s and t are positive integers; and the performing data conversion on the first data to obtain third data that can be supported by the hardware parameter for operations, and performing data conversion on the second data to obtain fourth data that can be supported by the hardware parameter for operations comprises:

    splitting the first target data into first subdata and second subdata based on a first data splitting rule, wherein the first subdata is t high bits of the first target data, the second subdata is t low bits of the first target data, and the first subdata is signed integer data;
    performing a left shift operation of t bits on the first subdata to obtain third subdata;
    determining a sign of the second subdata based on a highest bit of the second subdata; and
    in response to the second subdata being a positive number, calculating a sum of the second subdata and the third subdata as converted data, wherein the converted data is the third data if the first target data is the first data, and the converted data is the fourth data if the first target data is the second data; or
    in response to the second subdata being a negative number, calculating a sum of the second subdata, the third subdata, and a compensation value as the converted value, wherein the compensation value is 2 to the power of t.

5. The method according to claim 3, wherein at least one of the first data and the second data is used as second target data, which has a data type of signed integer data, and a quantity of data bits of g, and the hardware parameter supports an operation on signed integer data with h data bits, wherein both g and h are positive integers; and the performing data conversion on the first data to obtain third data that can be supported by the hardware parameter for operations, and performing data conversion on the second data to obtain fourth data that can be supported by the hardware parameter for operations comprises:

> splitting the second target data into fourth subdata and at least one piece of fifth subdata based on a second data splitting rule, wherein the fourth subdata is data with a high-bit part of the second target data, the at least one piece of fifth subdata is data obtained by splitting a low-bit part of the second target data at least once, a quantity of data bits of the low-bit part of the second target data corresponding to each piece of fifth subdata is different, the fourth subdata is signed integer data, the fifth subdata is unsigned integer data, each piece of fifth subdata has h bits, and a quantity of bits of the fourth subdata is not greater than h;
> converting the at least one piece of the fifth subdata to signed integer data of h bits, to obtain sixth subdata; and determining converted data by combining the fourth subdata with at least one piece of the sixth subdata, wherein the converted data is the third data if the second target data is the first data, and the converted data is the fourth data if the second target data is the second data.

6. The method according to claim 5, wherein the converting the at least one piece of the fifth subdata to signed integer data of h bits, to obtain sixth subdata comprises:

> determining a sign bit corresponding to the fifth subdata;
> converting a data type of the fifth subdata based on the sign bit to obtain the sixth subdata.

7. The method according to claim 6, wherein the converting a data type of the fifth subdata based on the sign bit to obtain the sixth subdata comprises:

> determining a compensation parameter based on a binary value range of data supported by the hardware parameter of the neural network processor;
> multiplying the sign bit by the quantity of binary numbers in the binary value range to obtain a sign conversion bit;
> adding the compensation parameter, the sign conversion bit, and overflow-and-saturation processed data to obtain the sixth subdata.

8. A data processing method, comprising:

> determining a data parameter of to-be-processed data, wherein the data parameter comprises a data type and a quantity of data bits of the to-be-processed data;
> generating an instruction for data processing that is executable by a neural network processor based on the data parameter and a hardware parameter of the neural network processor; and
> performing data processing on the to-be-processed data based on the instruction, to obtain data-processed data.

9. The method according to claim 8, wherein the to-be-processed data comprises first data and second data, the data processing comprises performing an operation on the first data and the second data, and the generating an instruction for data processing that is executable by a neural network processor based on the data parameter and a hardware parameter of the neural network processor comprises:

> determining a support relationship between the data type and the hardware parameter based on data precision with which data processing can be performed by the neural network processor indicated by the hardware parameter and the data parameter;
> performing data conversion on the first data to obtain third data that can be supported by the hardware parameter for operations, and performing data conversion on the second data to obtain fourth data that can be supported by the hardware parameter for operations, in response to the support relationship indicating that the hardware parameter does not support operation on the first data and the second data; and
> generating an instruction for data processing that is executable by the neural network processor based on the third data and the fourth data.

10. An instruction generation apparatus for data processing by a neural network processor, comprising:

a first determining module (101), configured to determine a hardware parameter of the neural network processor performing data processing;

a second determining module (102), configured to determine a data parameter of to-be-processed data, wherein the data parameter comprises a data type and a quantity of data bits of the to-be-processed data; and

an instruction generation module (103), configured to generate an instruction for data processing that is executable by the neural network processor based on the hardware parameter determined by the first determining module and the data parameter determined by the second determining module.

11. The instruction generation apparatus according to claim 10, wherein the instruction generation module (103) is further configured to:

determine a support relationship between the to-be-processed data and the hardware parameter based on the data parameter and data precision with which data processing can be performed by the neural network processor indicated by the hardware parameter; and

generate the instruction for data processing that is executable by the neural network processor based on the support relationship.

12. A data processing apparatus, comprising:

a parameter determining module (201), configured to determine a data parameter of to-be-processed data, wherein the data parameter comprises a data type and a quantity of data bits of the to-be-processed data;

an instruction determining module (202), configured to generate an instruction for data processing that is executable by a neural network processor based on the data parameter determined by the parameter determining module and a hardware parameter of the neural network processor; and

a data processing module (203), configured to process the to-be-processed data based on the instruction determined by the instruction determining module, to obtain processed data.

13. The data processing apparatus according to claim 12, wherein the instruction determining module (202) is further configured to:

determine a support relationship between the data type and the hardware parameter based on data precision with which data processing can be performed by the neural network processor indicated by the hardware parameter and the data parameter;

perform data conversion on the first data to obtain third data that can be supported by the hardware parameter for operations, and performing data conversion on the second data to obtain fourth data that can be supported by the hardware parameter for operations, in response to the support relationship indicating that the hardware parameter does not support operation on the first data and the second data; and

generate an instruction for data processing that is executable by the neural network processor based on the third data and the fourth data.

14. A computer readable storage medium, storing a computer program thereon, which is used for implementing the instruction generation method for data processing by a neural network processor according to any one of claims 1 to 7 or for implementing the data processing method according to claim 8 or 9.

15. An electronic device, wherein the electronic device comprises:

a processor; and

a memory, configured to store processor-executable instructions,

wherein the processor is configured to read the executable instructions from the memory, and execute the instructions to implement the instruction generation method for data processing by a neural network processor according to any one of claims 1 to 7 or to implement the data processing method according to claim 8 or 9.

FIG. 1a

FIG. 1b

FIG. 1c

S201

Determining a hardware parameter of the neural
network processor performing data processing

S202

Determining a data parameter of to-be-processed data

S203

Generating an instruction for data processing that is
executable by the neural network processor based on
the hardware parameter and the data parameter

FIG. 2

S201

Determining a hardware parameter of the neural
network processor performing data processing

S202

Determining a data parameter of to-be-processed data

S203

S301

Determining a support relationship between the
to-be-processed data and the hardware parameter based
on the data parameter and data precision with which data
processing can be performed by the neural network
processor indicated by the hardware parameter

S302

Generating the instruction for data processing that is
executable by the neural network processor based on
the support relationship

FIG. 3

~S201

Determining a hardware parameter of the neural network processor performing data processing

~S202

Determining a data parameter of to-be-processed data

~S203

~S301

Determining a support relationship between the to-be-processed data and the hardware parameter based on the data parameter and data precision with which data processing can be performed by the neural network processor indicated by the hardware parameter

~S302

~S401

Performing data conversion on the first data to obtain third data that can be supported by the hardware parameter for operations, and performing data conversion on the second data to obtain fourth data that can be supported by the hardware parameter for operations, in response to the support relationship indicating that the hardware parameter does not support operation on the first data and the second data

~S402

Generating an instruction for operation that is executable by the neural network processor based on the third data and the fourth data

FIG. 4

```
                                                              ⌒S401
  ┌─────────────────────────────────────────────────────────────┐
  │                                    ⌒S501                      │
  │    ┌─────────────────────────────────────────────────────┐   │
  │    │  Splitting, based on a first data splitting rule,    │   │
  │    │  the first target data into first subdata with a     │   │
  │    │  high t-bit part of the first target data and        │   │
  │    │  second subdata with a low t-bit part of the         │   │
  │    │  first target data. The first subdata is signed      │   │
  │    │  integer data, and the second subdata is unsigned    │   │
  │    │  integer data                                        │   │
  │    └─────────────────────────────────────────────────────┘   │
  │                              │                               │
  │                              │         ⌒S502                  │
  │    ┌─────────────────────────▼───────────────────────────┐   │
  │    │       Performing a left shift operation of t bits    │   │
  │    │       on the first subdata to obtain third subdata   │   │
  │    └─────────────────────────────────────────────────────┘   │
  │                              │                               │
  │                              │         ⌒S503                  │
  │    ┌─────────────────────────▼───────────────────────────┐   │
  │    │      Determining a sign of the second subdata based  │   │
  │    │      on a highest bit of the second subdata          │   │
  │    └─────────────────────────────────────────────────────┘   │
  │                              │                               │
  │                              │         ⌒S504                  │
  │    ┌─────────────────────────▼───────────────────────────┐   │
  │    │   In response to the second subdata being a positive │   │
  │    │   number, calculating a sum of the second subdata    │   │
  │    │   and the third subdata as the first target data     │   │
  │    └─────────────────────────────────────────────────────┘   │
  │                              │                               │
  │                              │         ⌒S505                  │
  │    ┌─────────────────────────▼───────────────────────────┐   │
  │    │   In response to the second subdata being a negative │   │
  │    │   number, calculating a sum of the second subdata,   │   │
  │    │   the third subdata, and a compensation value as     │   │
  │    │   converted data                                     │   │
  │    └─────────────────────────────────────────────────────┘   │
  └─────────────────────────────────────────────────────────────┘
```

FIG. 5

FIG. 6

S401

S601

Splitting, based on a second data splitting rule, second target data into fourth subdata with a high-bit part of the second target data and at least one piece of fifth subdata obtained by splitting a low-bit part of the second target data at least once

S602

S701

Determining a sign bit corresponding to the fifth subdata

S702

Converting a data type of the fifth subdata based on the sign bit to obtain the sixth subdata

S603

Determining converted data by combining the fourth subdata with at least one piece of the sixth subdata

FIG. 7

S801

Determining a data parameter of to-be-processed data

S802

Generating an instruction for data processing that is executable by a neural network processor based on the data parameter and a hardware parameter of the neural network processor

S803

Performing data processing on the to-be-processed data based on the instruction, to obtain data-processed data

FIG. 8

S801

Determining a data parameter of to-be-processed data

S802

S901

Determining a support relationship between the data type and the hardware parameter based on data precision with which data processing can be performed by the neural network processor indicated by the hardware parameter and the data parameter

S902

Performing data conversion on the first data to obtain third data that can be supported by the hardware parameter for operation, and performing data conversion on the second data to obtain fourth data that can be supported by the hardware parameter for operation, in response to the support relationship indicating that the hardware parameter does not support operation on the first data and the second data

S903

Generating an instruction for operation that is executable by the neural network processor based on the third data and the fourth data

S803

Performing data processing on the to-be-processed data based on the instruction, to obtain data-processed data

FIG. 9

101 102 103

| First determining module | Second determining module | Instruction generation module |

FIG. 10

201 202 203

| Parameter determining module | Instruction determining module | Data processing module |

FIG. 11

Processor 111

| Input device 113 | Memory 112 | Output device 114 |

Electronic device 100

FIG. 12